# EUROPÄISCHE PATENTSCHRIFT

(11) **EP 1 840 075 B1**
(45) Veröffentlichungstag und Bekanntmachung des Hinweises auf die Patenterteilung: **02.06.2010**
(21) Anmeldenummer: 07001614.2
(22) Anmeldetag: 25.01.2007
(51) Int. Cl.: B66C 23/70

(54) **Teleskopkran-Auslegerteil mit schwächer und stärker gekrümmten Querschittssegmenten im oberen Profilteil und im unteren Profilteil**
Telescopic crane beam with greater and lesser curved profile segments in the upper and lower profile part
Partie d'avant-bras de grue télescopique doté de segments transversaux courbés de manière plus diminuée et de manière plus renforcée au niveau de la partie de profil supérieure et de la partie de profil inférieure

(30) Priorität: 29.03.2006 DE 102006014573
(43) Veröffentlichungstag der Anmeldung: 03.10.2007
(73) Patentinhaber: Manitowoc Crane Group France SAS, 69130 Ecully (FR)
(72) Erfinder: Paschke, Franz, 26452 Sande (DE)
(74) Vertreter: Schwabe - Sandmair - Marx

(56) Entgegenhaltungen:
- EP-A1- 0 668 238
- DE-U1- 20 004 016
- DE-U1- 20 120 121

## Beschreibung

Die Erfindung betrifft ein Teleskopkran-Auslegerteil mit einem oberen Profilteil und einem unteren Profilteil, die gekrümmte Querschnittsabschnitte aufweisen.

Aus der EP 0 499 208 A2 sind Profile bekannt, die annähernd rund sind oder anstatt des Kreises eine hochstehende Ellipse verwenden. Ausleger aus diesen Querschnitten haben eine geringere Steifigkeit um die vertikale und horizontale Achse, eine geringere Torsionssteifigkeit und eine geringere Verdrehsicherheit. Es werden auch Profile mit halbkastenförmigen oder auch trapezförmigen Oberschalen beschrieben. Die geraden Schenkel der Ober- und Unterschale liegen in einer Ebene. Bei dieser Form sind beide seitlichen und das obere Segment stark beulgefährdet.

Aus der EP 0 668 238 A1 ist ein Auslegerprofil bekannt, das aus einem oberen halbkastenförmigen Abschnitt und einem abgerundeten unteren Abschnitt besteht. Der abgerundete untere Abschnitt weist wenigstens einen ebenen Wandungsabschnitt auf. Die geraden Schenkel des oberen halbkastenförmigen Abschnitts liegen parallel zur vertikalen Symmetrieachse und sind mit den unteren Schenkeln verbunden. Sowohl der obere als auch der untere Auslegerabschnitt sind besonders in Bereichen der Verlagerung, Überlappung, und Krafteinleitungen stark stabilitätsgefährdet.

In der DE 200 04 016 U1 wird ein Auslegerquerschnitt beschrieben, der einen unteren runden und einen oberen halbkastenförmigen Teil aufweist, deren gegeneinander gerichtete Schenkel miteinander verschweißt sind. Der obere Teil hat die Form eines gleichschenkligen Trapezes ohne längere Grundlinie. Die parallel zur vertikalen Symmetrieachse verlaufenden Schenkel des unteren Profils stoßen unter Bildung eines Winkels mit den Schenkeln des oberen Profilteils zusammen. Um die Gefahr des Beulens in der dünneren Oberschale zu verringern, muss die dickere Unterschale weit über der neutralen Zone des Querschnitts enden. Außerdem wird dem Gesamtquerschnitt durch das Einziehen der geraden Stegwände Steifigkeit entzogen. Ein so ausgeführter Ausleger hat ein höheres Gewicht und eine größere Gesamtverformung.

Ein Teleskopausleger mit einem unteren Abschnitt, der aus mehreren angrenzenden nach außen gekrümmten Schalensegmenten besteht, ist aus der DE 196 24 312 A1 und EP 0 814 050 B1 bekannt. Die Biegesteifigkeit, Torsionssteifigkeit, Beulsicherheit, Verdrehsicherheit und gute Lasteinleitung wurde im druckbeanspruchten unteren Teil deutlich verbessert. Auch dieser Querschnitt besitzt einen oberen halbkastenförmigen Abschnitt, bei dem die geraden in einer Ebene liegenden Seiten miteinander verschweißt sind.

Die Gebrauchsmusterschrift DE 201 20 121 U1 beschreibt ein Teleskopkran-Auslegerteil gemäß dem Oberbegriff des Anspruchs 1, mit einen Auslegerquerschnitt mit einer Oberschale, die mehr als zwei nach außen gekrümmte Schalensegmente besitzt, wobei die geraden Schenkelenden des oberen und unteren Querschnittsteils parallel zur vertikalen Symmetrieachse verlaufen und miteinander verschweißt werden. Bei diesem bekannten Profil wird nicht nur der untere Teil für Druckspannungen ausgelegt, sondern auch im oberen Teil wird die Beulsteifigkeit erhöht.

Die bekannten Teleskopausleger versuchen also je nach Krantyp die Oberschale oder die Unterschale zu optimieren. Ein einheitliches Gesamtkonzept ist nicht erkennbar. Kranausleger sind hauptsächlich einer Biegebeanspruchung senkrecht und quer zur Wippebene ausgesetzt. Infolge von Wind, Schwenken, usw. wirken starke Seitenlasten auf den Ausleger. Wird der Ausleger noch zusätzlich ab- oder vorgespannt, so wird der gesamte obere und untere Teil mit Druckspannungen belastet. Der obere Querschnittsteil besteht bei den gebräuchlichen Auslegerquerschnitten hauptsächlich aus ebenen Blechen, wobei die äußeren Ecken abgerundet sind. Alle diese Querschnitte, bei denen der obere Abschnitt halbkastenförmig ausgebildet ist, sind stark beulgefährdet. Der untere Querschnittsteil unterscheidet sich in seiner Form wesentlich vom oberen Teil, Schalensegmente und/oder Mehrfachkantungen sollen die Beulsicherheit und Lasteinleitungen verbessern.

Eine Aufgabe der Erfindung ist es, ein Teleskopauslegerprofil bereitzustellen, das Nachteile des Standes der Technik überwindet. Durch eine konsequente Anordnung von Segmenten sowohl im oberen als auch im unteren Querschnittsteil soll eine hohe Steifigkeit um beide Achsen erreicht und der Ausleger allseitig beulsicher ausgebildet werden. Unter anderem soll ferner ein Auslegerquerschnitt bereitgestellt werden, der bei gleichem Platzbedarf größere Lasten aufnehmen kann.

Diese Aufgabe wir durch ein Teleskopkran-Auslegerteil gemäß dem Anspruch 1 gelöst. Die Unteransprüche definieren bevorzugte Ausführungsformen der Erfindung

Die vorliegende Erfindung berücksichtigt die folgenden Überlegungen: Der obere Querschnittsteil und der untere Querschnittsteil sollten so ausgebildet werden, dass sie biegesteif und beulsicher sind. Die Flächenträgheitsmomente um beide Achsen sollten möglichst groß sein. Die wird erfindungsgemäß ermöglicht, obwohl diese Anforderungen eigentlich im Widerspruch zu einander stehen, da ein enger Radius oder nach innen geneigte Seitenwände die Beulsicherheit erhöhen, aber die Flächenträgheitsmomente und somit die Gesamtsteifigkeit verringern. Ferner wird berücksichtigt, dass der zur Verfügung stehende Raum für einen Ausleger optimal ausgefüllt werden sollte. Eine enge Schachtelung der Teleskopteile ist notwendig. Fertigungsaufwand, Richtarbeiten und Zusatzgewichte werden minimiert, wenn nachträglich aufzubringende beulaussteifende Verstärkungen nicht mehr benötigt werden.

Erfindungsgemäß wird ein Teleskopkran-Auslegerteil bereitgestellt, mit einem oberen Profilteil und einem unteren Profilteil, die gekrümmte Querschnittsabschnitte aufweisen, wobei das obere Profilteil und das untere Profilteil auf einer Seite des zur vertikalen Mittelebene symmetrischen Querschnitts jeweils ausgehend vom Verbindungspunkt der Profilteile ein weniger stark nach außen gekrümmtes Segment und ein stärker nach außen gekrümmtes Segment aufweisen, und wobei die am Verbindungspunkt aneinander angrenzenden Endsegmente schräg nach außen verlaufen.

Durch eine erfindungsgemäße Kombination von stärker nach außen gekrümmten Segmenten mit angrenzenden weniger stark nach außen gekrümmten Segmenten und anschließenden schräg nach außen geneigten Endsegmenten bzw. Schenkelenden erhält mehr Material des Querschnitts einen größeren Abstand zu dessen Schwerachsen und kann den zur Verfügung gestellten Raum optimal nutzen. Die Beulfeldbreite der schwächer nach außen gekrümmten seitlichen Segmente mit ihren angrenzenden Schenkelenden wird sowohl im Oberteil als auch im Unterteil eindeutig begrenzt durch die stärker nach außen gekrümmten Segmente und durch die stumpfen Winkel, die die schräg nach außen geneigten Schenkelenden von Ober- und Unterteil bilden. Diese Kombination verbessert die Gesamtsteifigkeit, Verdrehsicherheit, Beulsicherheit, Lasteinleitung und Führungseigenschaften eines Auslegers.

Der Querschnitt eines Teleskopauslegers ist im Überlappungsbereich, der Verlagerung im Kragen oder im Fuß und im Verriegelungsbereich unterschiedlichen Belastungen ausgesetzt. Alle diese Bereiche werden durch den erfindungsgemäßen Querschnitt positiv beeinflusst. Die Überlappung- bzw. Einspannlänge sollte bei den einzelnen Teleskopteilen so gering wie möglich sein. Ist die Überlappungslänge kurz, ist der eingeschobene Ausleger kurz (wichtig für eine geringe Fahrzeuglänge) und austeleskopiert lang, und das Gesamtgewicht ist gering. Bei kurzer Überlappungslänge sind die Schubspannungen hoch. Durch die erfindungsgemäße Ausführung können die Querschnittsseiten höhere Schubspannungen aufnehmen. Die seitlichen Kanten in Verbindung mit den nach außen gekrümmten Schalensegmenten erhöhen die Tragfähigkeit des Querschnitts, da die Wahrscheinlichkeit eines Versagens infolge von Schubbeulen erheblich reduziert wird.

Besondere Beachtung muss dem inneren Teleskopteil im Bereich der Lagerung im Kragen des äußeren Teleskopteils geschenkt werden. Das innere Teleskopteil ist einem dreiachsigen Spannungszustand ausgesetzt. Die gekrümmten Segmente im oberen und unteren Profilteil in Verbindung mit den durch die nach außen geneigten Schalensegmente entstehenden seitlichen Kanten können auf engem Raum hohe Lasten aufnehmen, gewähren ein Ebenbleiben des Querschnitts, führen das Auslegerteil sehr genau beim Teleskopieren und verhindern ein Ausbeulen. Indem die auslaufenden Schenkelenden schräg nach außen angeordnet sind, und eine Kante als äußerste seitliche Begrenzung des Querschnitts bilden, können die Stegseiten im Kragen zusätzlich gelagert werden. Die dickeren Verriegelungsbleche haben beim Teleskopieren keinen störenden Einfluss mehr.

Bei der Lagerung des Fußes des inneren Teleskopteils im äußeren wird die Außenhülle nicht wie im Kragenbereich mit quer zur Auslegerrichtung wirkenden Druckspannungen belastet, sondern mit zusätzlichen Zugspannungen. Die Verformungsrichtung der Seitenteile verläuft im Gegensatz zum Kragenbereich nach innen. Ein zusätzliches Einschnüren des Querschnitts ist zu vermeiden, damit sich das seitliche Flächenträgheitsmoment zweiter Ordnung nicht verringert und die seitliche Verformung des Gesamtauslegers sich nicht vergrößert.

Wird die Normalkraft über zwei seitlich angeordnete Verriegelungseinheiten von einem Teleskopteil in das andere weitergeleitet, so sind die Verriegelungsbleche dicker als die Auslegergrundbleche. Aufgrund der engen Schachtelung der Auslegerteile sind die Verriegelungsbleche beim Stand der Technik oft exzentrisch angeordnet. Durch den erfindungsgemäßen Querschnitt mit seinen schräg nach außen geneigten Schenkelenden wird die Bolzenkraft zentrisch eingeleitet. Die Spannungsverteilung ist gleichmäßiger, zusätzliche Biegespannungen infolge von Exzentrizitäten treten nicht auf. Material wird somit eingespart.

Der Vorteil der vorgeschlagenen Anordnung der Seitensegmente liegt auch darin, dass bei großen Verriegelungskräften und hohen Seitenbelastungen der wirksame Querschnitt nicht durch Beulen reduziert wird.

Die Endsegmente können in einem stumpfen Winkel zueinander liegen bzw. aneinander stoßen. Eine seitliche Konstruktion aus zwei nach außen gekrümmten Schalen in Kombination mit nach außen geneigten Endsegmenten oder Schenkelenden, die mit einem stumpfen Winkel aneinander stoßen, wirkt dem Einschnüren des Querschnitts entgegen.

Bei einer bevorzugten Ausführungsform sind die Radien der stärker nach außen gekrümmten Segmente kleiner als die halbe Breite des Querschnitts. Weiterhin sind bevorzugt die Radien der weniger stark nach außen gekrümmten Segmente größer als die halbe Breite des Querschnitts.

Das obere und das untere Profilteil an den Verbindungspunkten sind bei einer erfindungsgemäßen Ausgestaltung miteinander verschweißt. Ein besonderer Vorteil der schräg nach außen geneigten Schenkelenden in Verbindung mit den nach außen gekrümmten Segmenten ist auch in der Fertigung, speziell beim Schweißen zu sehen. Besonders beim Laser- oder Hybridschweißverfahren, bei dem der Spalt für die Stumpfnaht eng sein soll, kann auf ein aufwendiges Anfasen der Kanten verzichtet werden. Während des Schweißvorgangs verhindern die Kante und die nach außen gekrümmten Segmente ein Einfallen der Querschnittsseite. Nachträgliche Richtarbeiten können eingespart werden.

Die nach außen geneigten oder verlaufenden Endsegmente können in unterschiedlichen Ausführungsvarianten und auf unterschiedliche Weise bereitgestellt werden. Eine Möglichkeit besteht darin, dass die Endsegmente gerade bzw. flache Segmente umfassen, die nach den weniger stark gekrümmten Segmenten angeordnet sind bzw. an diese anschließen. Hierbei würden die Endsegmente also separat und zusätzlich zu den gekrümmten Segmenten vorgesehen. Andererseits ist es erfindungsgemäß aber auch möglich, dass die Endsegmente durch die weniger stark gekrümmten Segmente selbst gebildet werden, einen Endabschnittsteil dieser Segmente bilden bzw. durch einen solchen Endabschnitt ausgebildet werden.

Der Gesamtquerschnitt kann im Rahmen der Erfindung unterschiedliche Formen annehmen. Der Querschnitt kann im oberen Profilteil ein nach dem stärker gekrümmten Segment angeordnetes bzw. daran anschließendes gerades bzw. flaches Segment aufweisen, das den oberen, speziell den oberen horizontalen Querschnittsabschluss bildet. Ferner kann der Querschnitt im oberen Profilteil ein nach dem stärker gekrümmten Segment angeordnetes bzw. daran anschließendes weiteres weniger stark gekrümmtes Segment aufweisen, das den oberen Querschnittsabschluss bildet, wobei das weitere Segment insbesondere einen größeren Krümmungsradius aufweist als das weniger stark gekrümmte Segment, das näher am Verbindungspunkt liegt.

Bei einer Variante weist der Querschnitt im unteren Profilteil ein nach dem stärker gekrümmten Segment angeordnetes bzw. daran anschließendes gerades bzw. flaches Segment auf, das den unteren, speziell den unteren horizontalen Querschnittsabschluss bildet. Es ist aber auch grundsätzlich möglich, eine Gestaltung zu wählen, bei welcher der Querschnitt im unteren Profilteil ein nach dem stärker gekrümmten Segment angeordnetes bzw. daran anschließendes weiteres weniger stark gekrümmtes Segment aufweist, das den unteren Querschnittsabschluss bildet, wobei das weitere Segment insbesondere einen größeren oder gleichen Krümmungsradius aufweist als das weniger stark gekrümmte Segment, das näher am Verbindungspunkt liegt (Ein gleicher Krümmungsradius in einem Profilteil für die weniger stark gekrümmten Segmente ist preiswerter herzustellen).

Die Radien der stärker gekrümmten Segmente im oberen Profilteil können sich von den Radien der stärker gekrümmten Segmente im unteren Profilteil unterscheiden, insbesondere größer sein, bevorzugt jedoch nicht größer als die halbe Breite des Querschnitts. Auch die Radien der weniger stark gekrümmten Segmente im oberen Profilteil können sich von den Radien der weniger stark gekrümmten Segmente im unteren Profilteil unterscheiden, insbesondere kleiner sein, bevorzugt jedoch nicht kleiner als die halbe Breite des Querschnitts. Natürlich umfasst die Erfindung auch Fälle, bei denen die entsprechenden, oben genannten Radien in den oberen und unteren Profilteilen sich nicht unterscheiden.

Die Erfindung wird im weiteren anhand von Ausführungsbeispielen näher erläutert. Sie kann alle hierin beschriebenen Merkmale einzeln oder in geeigneter Kombination umfassen. In den beiliegenden Zeichnungen zeigen:
- Figur 1: einen Teleskopausleger-Querschnitt mit geraden Schenkel-Endsegmenten und geradem oberen Segment;
- Figur 2: einen Querschnitt mit geraden Schenkel-Endsegmenten und mit einem weniger stark nach außen gekrümmten oberen Segment;
- Figur 3: einen Querschnitt ohne separate gerade Schenkel-Endsegmenten und mit geradem oberen Segment; und
- Figur 4: eine Querschnittsseite mit einem Verriegelungsblech.

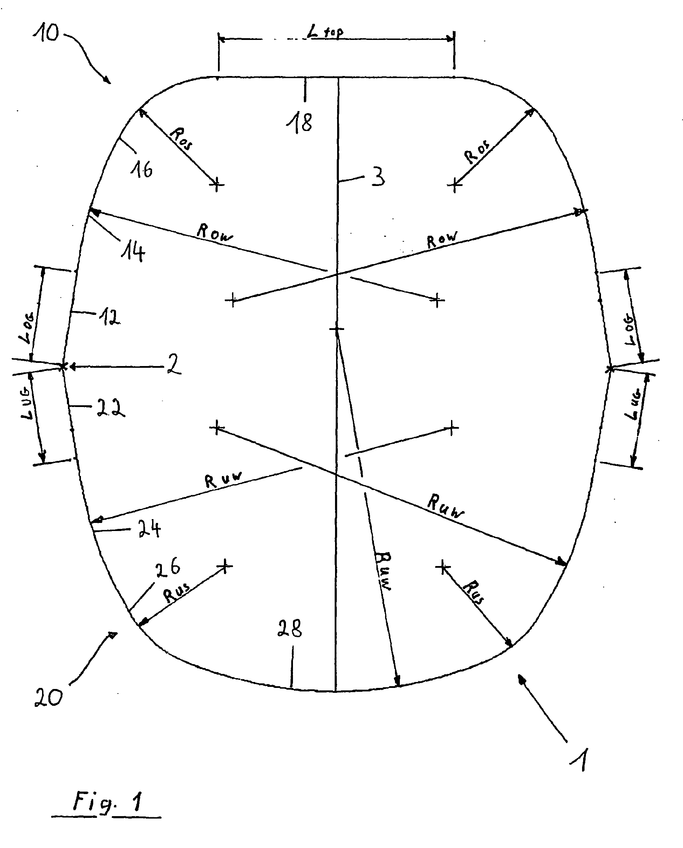

Eine erste Ausführungsform eines erfindungsgemäßen Teleskopkran-Auslegerteils ist im Querschnitt in der Figur 1 zu sehen. Das Auslegerteil ist insgesamt mit dem Bezugszeichen 1 versehen, und es weist ein oberes Profilteil 10 und ein unteres Profilteil 20, die an zwei Verbindungspunkten aneinander angrenzen, von denen derjenige im linken Halbschnitt mit dem Bezugszeichen 2 versehen ist. Das Auslegerteil 1 ist symmetrisch um die vertikale Mittelebene 3; deswegen sind seine Segmente nur auf der linken Seite gekennzeichnet und finden auf der rechten Seite ihre gespiegelte Entsprechung.

Vom Verbindungspunkt aus gesehen, weist der obere Querschnitt zunächst ein schräg nach außen verlaufendes, gerades (bzw. flaches oder ebenes) Endsegment 12 auf, das die Länge L_{UG} aufweist. An dieses gerade Segment 12 schließt sich in einem tangentialen Übergang ein weniger stark gekrümmtes Segment 14 an, dessen Krümmungsradius mit R_{OW} angezeigt ist. Der Krümmungsradius R_{OW} ist wesentlich größer als die halbe Breite des Querschnitts (Breite zwischen den Verbindungspunkten 2). Wiederum im tangentialen Übergang folgt auf das weniger stark gekrümmte Segment 14 ein stärker gekrümmtes Segment 16 mit dem Krümmungsradius R_{OS}, der wesentlich kleiner ist als die halbe Breite des Querschnitts. Das Segment 16 geht wieder rund bzw. tangential in ein gerades (ebenes oder flaches) Segment 18 über, das auf beiden Seiten der Mittelebene 3 in gleicher Länge vorhanden ist, den oberen Abschluss des Querschnitts bildet und die Länge Lₜₒₚ aufweist.

Das untere Profilteil hat ausgehend vom Verbindungspunkt 2 das gerade oder flache bzw. ebene Segment 22 mit der Länge L_{OG}, das weniger stark gekrümmte Segment 24 mit dem Radius R_{UW}, der größer ist als die halbe Breite des Querschnitts, daran anschließen wiederum das stärker gekrümmte Segment 26 mit dem Radius Rus, der wesentlich kleiner ist als die halbe Breite des Querschnitts und hierauf folgend das ebenfalls weniger stark gekrümmte Segment 28, das den unteren Abschluss des Querschnitts bildet und ebenfalls den Radius R_{UW} aufweist. Die Segmente 22, 24, 26 und 28 gehen tangential ineinander über, und das Segment 28 liegt symmetrisch zur Mittelebene 3. Aus fertigungstechnischen Gründen könnten die Übergänge auch abgerundet ausgestaltet sein.

Am Verbindungspunkt 2 werden das obere Profilteil 10 und das untere Profilteil 20 miteinander verschweißt, wobei sich schon hier vorteilhaft auswirkt, dass die Kanten nach außen stehen und damit schon ein durch die Konstruktion vorgegebener Spalt für die Schweißnaht bereit gestellt wird. Die am Verbindungspunkt 2 entstehenden seitlichen Kanten erhöhen die Festigkeit des Gesamtquerschnitts gegen Beulen. Sie erleichtern ferner das Führen und Lagern des Teleskopteils zusammen mit den darauf folgenden ebenen Abschnitten. In dem Sinne, wie die schwächer und stärker gekrümmten Segmente vom Verbindungspunkt 2 aus hintereinander angeordnet sind, weist der erfindungsgemäße Querschnitt auch eine gewisse Symmetrie um die horizontale Mittelebene auf, die in den Figuren nicht dargestellt ist, aber durch die Verbindungspunkte 2 laufen würde. Eine echte Symmetrie ist hier zwar nicht verbunden, weil die Krümmungsradien sich oben und unten unterscheiden können, jedoch lässt sich ein stimmiges Gesamtkonzept für den oberen und unteren Profilteil erkennen, das eine konsequente Anordnung von Segmenten besitzt, die mit ihrer jeweiligen Krümmung dazu beitragen, sowohl dem oberen als auch dem unteren Querschnittsteil und damit dem Gesamtquerschnitt eine hohe Steifigkeit um beide Achsen zu verleihen. Insbesondere wird durch die erfindungsgemäß vorgesehenen Krümmungen viel Material des Querschnitts nach außen verlagert, und zwar über die gesamte Höhe des Auslegerteils, was die Formstabilität erhöht.

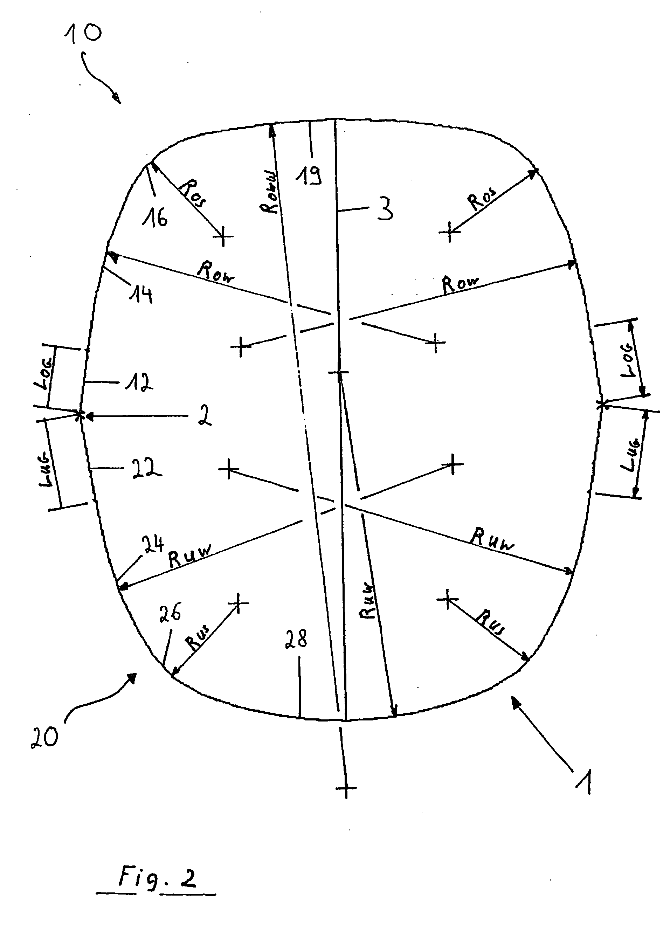

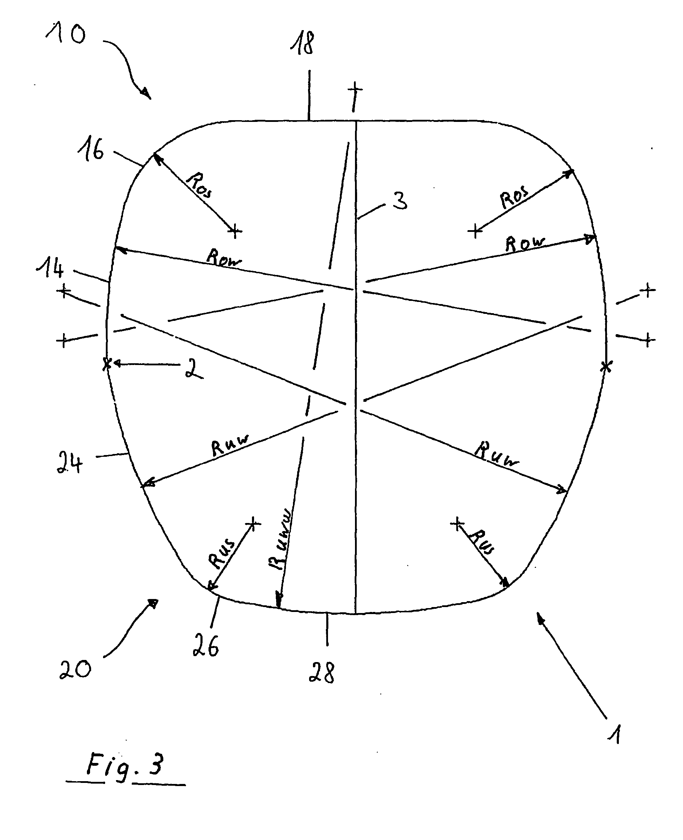

Die obigen Betrachtungen bezüglich der Formstabilität und der Beulsicherheit gelten auch für die beiden anderen Ausführungsformen der Erfindung, die in den Figuren 2 und 3 gezeigt sind. Hier weisen die gleichen Bezugszeichen auf die zumindest funktionsgleichen Elemente bzw. Segmente hin, und es sollen im Weiteren nur die Unterschiede zur Ausführungsform nach Figur 1 besprochen werden.

Der in Figur 2 dargestellte Querschnitt hat anders als der Querschnitt der Figur 1 keinen oberen flachen Abschluss. Hier schließt sich an das stärker gekrümmte Segment 16 in abgerundetem oder tangentialem Übergang wiederum ein Segment an, das beidseitig symmetrisch die Mittelebene 3 übergreift und eine noch schwächere Krümmung aufweist als das schwach gekrümmte Segment Row. Sein Krümmungsradius ist mit R_{OWW} aufgezeigt, und der Vorteil einer solchen Ausführungsform besteht wiederum darin, dass die Krümmung bei starker Biegung ein Einstellen des oberen Segments verhindert und bei ab- oder vorgespannten Systemen das obere Segment höhere Druckkräfte aufnehmen kann und damit die Formstabilität steigt. Die relativ flache Krümmung des Segments 19 gestattet wiederum die geeignete Lagerung und Führung. Auch bei der Ausführungsform nach Figur 2 sind die flachen bzw. ebenen (geraden) Endsegmente 12, 22 vorgesehen, die in stumpfen Winkel aneinander stoßen, eine längs verlaufende Kante bilden, und damit zur Beulsicherheit beitragen.

Die dritte Ausführungsform, dargestellt in der Figur 3, weist wiederum einen oberen, flachen Abschluss durch das gerade bzw. ebene Segment 18 auf, das gespiegelt zur Mittelachse 3 liegt. Der Unterschied zu den Ausführungsformen der Figuren 1 und 2 liegt hier darin, dass die Endsegmente, die an den Verbindungspunkt angrenzen, nicht als separate flache bzw. ebene Segmente ausgestaltet sind. Bei der Figur 3 stoßen vielmehr die weniger gekrümmten Segmente 14 und 24 unmittelbar am Verbindungspunkt 2 zusammen, sie sind aber im Bereich des Verbindungspunktes noch immer so angeordnet, dass sie schräg nach außen verlaufen, so dass sich am Verbindungspunkt 2 eine nach außen vorstehende Kante ergibt, welche die Sicherheit gegen ein Beulen erhöht. Gegenüber den Ausführungsformen der Figuren 1 und 2 sind die schwächer gekrümmten Segmente bei dem Beispiel nach Figur 3 mit sehr großen Radien versehen worden, und dies gilt sowohl für die an den Verbindungspunkt angrenzenden Segmente 14 und 24 mit den Radien R_{OW} und R_{UW} sowie für das untere Abschlusssegment 28 mit dem Radius R_{OWW}.

Natürlich können die Ausgestaltungen, die in den Figuren 1, 2 und 3 gezeigt sind, im Rahmen der vorliegenden Erfindung auch beliebig kombiniert werden.

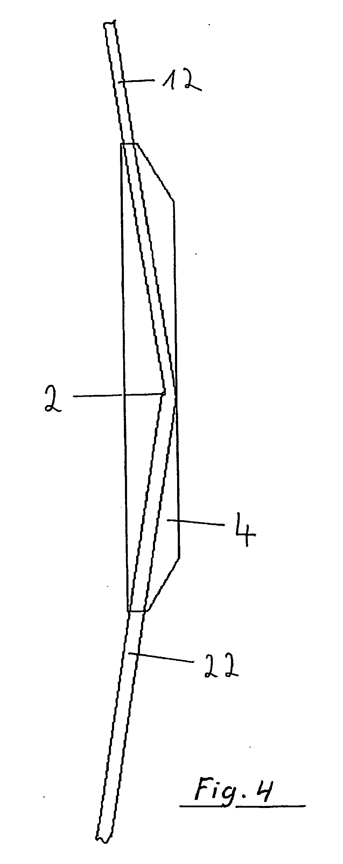

Die Figur 4 zeigt ein Detail eines erfindungsgemäßen Auslegerteils am Verbindungspunkt 2, an den im dargestellten Fall zwei gerade bzw. flache Segmente 12 und 22 angrenzen. Die Segmente 12 und 22 sind am Verbindungspunkt 2 miteinander verschweißt, so dass sich die hier gut sichtbare nach außen vorstehende Längskante ergibt. Im Bereich dieser Längskante ist in Figur 4 dargestellt, wie dort ein Verriegelungsblech 4 liegen würden, das an den Stellen im Längsverlauf des Auslegerteils vorgesehen wird, wo Verriegelungsbolzen den Auslegerquerschnitt durchdringen, um einen mechanischen Eingriff zweier nebeneinander liegender Teleskopteile zu bewirken.

Solchermaßen angeordnete Verriegelungsbleche 4, die den Verbindungspunkt 2 beidseitig umgreifen, haben beim Teleskopieren keinen störenden Einfluss und ermöglichen eine enge Schachtelung der Teleskopteile ineinander. Trotzdem gewähren sie ein zentrisches Einleiten der Normalkraft bei der Weiterleitung von einem Teleskopteil in das andere, so dass zusätzliche Biegespannungen, die im Stand der Technik aufgrund der notwendigen exzentrischen Verriegelungsanordnung oft auftreten, erfindungsgemäß nicht eingeleitet werden. Damit kann wiederum Material eingespart und der Ausleger insgesamt leichter ausgestaltet werden.

## Patentansprüche

1. Teleskopkran-Auslegerteil (1) mit einem oberen Profilteil (10) und einem unteren Profilteil (20), die gekrümmte Querschnittsabschnitte (14 bis 19; 24 bis 28) aufweisen, wobei das obere Profilteil (10) und das untere Profilteil (20) auf einer Seite des zur vertikalen Mittelebene (3) symmetrischen Querschnitts jeweils ausgehend vom Verbindungspunkt (2) der Profilteile (10, 20) ein weniger stark nach außen gekrümmtes Segment (14, 24) und ein stärker nach außen gekrümmtes Segment (16, 26) aufweisen, **dadurch gekennzeichnet dass** die am Verbindungspunkt (2) aneinander angrenzenden Endsegmente (12, 22; 14, 24) schräg nach außen verlaufen.

2. Teleskopkran-Auslegerteil nach Anspruch 1, **dadurch gekennzeichnet, dass** die Endsegmente in einem stumpfen Winkel zueinander liegen bzw. aneinander stoßen.

3. Teleskopkran-Auslegerteil nach Anspruch 1 oder 2, **dadurch gekennzeichnet, dass** die Radien der stärker nach außen gekrümmten Segmente (16, 26) kleiner sind als die halbe Breite des Querschnitts.

4. Teleskopkran-Auslegerteil nach einem der Ansprüche 1 bis 3, **dadurch gekennzeichnet, dass** die Radien der weniger stark nach außen gekrümmten Segmente (14, 24) größer sind als die halbe Breite des Querschnitts.

5. Teleskopkran-Auslegerteil nach einem der Ansprüche 1 bis 4, **dadurch gekennzeichnet, dass** das obere und das untere Profilteil (10, 20) an den Verbindungspunkten (2) miteinander verschweißt sind.

6. Teleskopkran-Auslegerteil nach einem der Ansprüche 1 bis 5, **dadurch gekennzeichnet, dass** die Endsegmente gerade bzw. flache Segmente (12, 22) umfassen, die nach den weniger stark gekrümmten Segmenten (14, 24) angeordnet sind bzw. an diese anschließen.

7. Teleskopkran-Auslegerteil nach einem der Ansprüche 1 bis 5, **dadurch gekennzeichnet, dass** die Endsegmente durch die weniger stark gekrümmten Segmente (14, 24) gebildet werden.

8. Teleskopkran-Auslegerteil nach einem der Ansprüche 1 bis 7, **dadurch gekennzeichnet, dass** der Querschnitt im oberen Profilteil (10) ein nach dem stärker gekrümmten Segment (16) angeordnetes bzw. daran anschließendes gerades bzw. flaches Segment (18) aufweist, das den oberen, speziell den oberen horizontalen Querschnittsabschluss bildet.

9. Teleskopkran-Auslegerteil nach einem der Ansprüche 1 bis 7, **dadurch gekennzeichnet, dass** der Querschnitt im oberen Profilteil (10) ein nach dem stärker gekrümmten Segment (16) angeordnetes bzw. daran anschließendes weiteres weniger stark gekrümmtes Segment (19) aufweist, das den oberen Querschnittsabschluss bildet, wobei das weitere Segment (19) insbesondere einen gleichen oder größeren Krümmungsradius aufweist als das weniger stark gekrümmte Segment (14), das näher am Verbindungspunkt liegt.

10. Teleskopkran-Auslegerteil nach einem der Ansprüche 1 bis 9, **dadurch gekennzeichnet, dass** der Querschnitt im unteren Profilteil ein nach dem stärker gekrümmten Segment angeordnetes bzw. daran anschließendes gerades bzw. flaches Segment aufweist, das den unteren, speziell den unteren horizontalen Querschnittsabschluss bildet.

11. Teleskopkran-Auslegerteil nach einem der Ansprüche 1 bis 9, **dadurch gekennzeichnet, dass** der Querschnitt im unteren Profilteil (20) ein nach dem stärker gekrümmten Segment (26) angeordnetes bzw. daran anschließendes weiteres weniger stark gekrümmtes Segment (28) aufweist, das den unteren Querschnittsabschluss bildet, wobei das weitere Segment (28) insbesondere einen gleichen oder größeren Krümmungsradius aufweist als das weniger stark gekrümmte Segment (24), das näher am Verbindungspunkt liegt.

12. Teleskopkran-Auslegerteil nach einem der Ansprüche 1 bis 11, **dadurch gekennzeichnet, dass** die Radien der stärker gekrümmten Segmente (16) im oberen Profilteil (10) sich von den Radien der stärker gekrümmten Segmente (26) im unteren Profilteil (20) unterscheiden, insbesondere größer sind, bevorzugt jedoch nicht größer als die halbe Breite des Querschnitts.

13. Teleskopkran-Auslegerteil nach einem der Ansprüche 1 bis 12, **dadurch gekennzeichnet, dass** die Radien der weniger stark gekrümmten Segmente (14) im oberen Profilteil (10) sich von den Radien der weniger stark gekrümmten Segmente (24) im unteren Profilteil (20) unterscheiden, insbesondere kleiner sind, bevorzugt jedoch nicht kleiner als die halbe Breite des Querschnitts.

## Claims

1. A telescopic crane jib part (1) comprising a top profiled part (10) and a bottom profiled part (20) comprising curved cross-sectional portions (14 to 19; 24 to 28), wherein the top profiled part (10) and the bottom profiled part (20) comprise, on a side of the cross-section, which is symmetrical with respect to the vertical mid-plane (3), starting from the joining point (2) of the profiled parts (10, 20) in each case, a less pronounced outwardly curved segment (14, 24) and a more pronounced outwardly curved segment (16, 26), **characterised in that** the end segments (12, 22; 14, 24) which mutually adjoin at the joining point (2) extend outwards at an angle.

2. The telescopic crane jib part according to claim 1, **characterised in that** the end segments lie at an obtuse angle to each other or abut each other at an obtuse angle.

3. The telescopic crane jib part according to claim 1 or 2, **characterised in that** the radii of the more pronounced outwardly curved segments (16, 26) are smaller than half the width of the cross-section.

4. The telescopic crane jib part according to any one of claims 1 to 3, **characterised in that** the radii of the less pronounced outwardly curved segments (14, 24) are greater than half the width of the cross-section.

5. Telescopic crane jib part according to any one of claims 1 to 4, **characterised in that** the top and bottom profiled parts (10, 20) are welded to each other at the joining points (2).

6. The telescopic crane jib part according to any one of claims 1 to 5, **characterised in that** the end segments comprise straight and/or flat segments (12, 22) which are disposed after the less pronounced curved segments (14, 24) and/or adjoin them.

7. The telescopic crane jib part according to any one of claims 1 to 5, **characterised in that** the end segments are formed by the less pronounced curved segments (14, 24).

8. The telescopic crane jib part according to any one of claims 1 to 7, **characterised in that** the cross-section in the top profiled part (10) comprises a straight and/or flat segment (18) which is disposed after the more pronounced curved segment (16) and/or adjoins it and forms the top, specifically the top horizontal termination of the cross-section.

9. The telescopic crane jib part according to any one of claims 1 to 7, **characterised in that** the cross-section in the top profiled part (10) comprises another, less pronounced curved segment (19) which is disposed after the more pronounced curved segment (16) and/or adjoins it and forms the top termination of the cross-section, wherein said other segment (19) in particular exhibits a radius of curvature which is identical to or greater than the less pronounced curved segment (14) which lies closer to the joining point.

10. The telescopic crane jib part according to any one of claims 1 to 9, **characterised in that** the cross-section in the bottom profiled part comprises a straight and/or flat segment which is disposed after the more pronounced curved segment and/or adjoins it and forms the bottom, specifically the bottom horizontal termination of the cross-section.

11. The telescopic crane jib part according to any one of claims 1 to 9, **characterised in that** the cross-section in the bottom profiled part (20) comprises another, less pronounced curved segment (28) which is disposed after the more pronounced curved segment (26) and/or adjoins it and forms the bottom termination of the cross-section, wherein said other segment (28) in particular exhibits a radius of curvature which is identical to or greater than the less pronounced curved segment (24) which lies closer to the joining point.

12. The telescopic crane jib part according to any one of claims 1 to 11, **characterised in that** the radii of the more pronounced curved segments (16) in the top profiled part (10) differ from the radii of the more pronounced curved segments (26) in the bottom profiled part (20) and are in particular greater, but are preferably not greater than half the width of the cross-section.

13. The telescopic crane jib part according to any one of claims 1 to 12, **characterised in that** the radii of the less pronounced curved segments (14) in the top profiled part (10) differ from the radii of the less pronounced curved segments (24) in the bottom profiled part (20) and are in particular smaller, but are preferably not smaller than half the width of the cross-section.

## Revendications

1. Partie de flèche de grue télescopique (1) ayant une partie profilée supérieure (10) et une partie profilée inférieure (20) comportant des tronçons de section transversale incurvés (4 à 19 ; 4 à 28), dans laquelle la partie profilée supérieure (10) et la partie profilée inférieure (20) comportent, sur un côté de la section transversale qui est symétrique par rapport au plan médian vertical (3) débutant respectivement à partir du point de jonction (2) des parties profilées (10, 20), un segment moins fortement incurvé vers l'extérieur (14, 24) et un segment plus fortement incurvé vers l'extérieur (16, 26), **caractérisée en ce que** les segments d'extrémité (12, 22 ; 14, 24) adjacents l'un à l'autre au niveau du point de jonction (2) s'étendent en oblique vers l'extérieur.

2. Partie de flèche de grue télescopique selon la revendication 1, **caractérisée en ce que** les segments d'extrémité sont à un angle obtus l'un par rapport à l'autre ou sont en butée l'un contre l'autre.

3. Partie de flèche de grue télescopique selon la revendication 1 ou 2, **caractérisée en ce que** les rayons des segments plus fortement incurvés vers l'extérieur (16, 26) sont plus petits que la demi-largeur de la section transversale.

4. Partie de flèche de grue télescopique selon l'une quelconque des revendications 1 à 3, **caractérisée en ce que** les rayons des segments moins fortement incurvés vers l'extérieur (14, 24) sont plus grands que la demie largeur de la section transversale.

5. Partie de flèche de grue télescopique selon l'une quelconque des revendications 1 à 4, **caractérisée en ce que** la partie profilée supérieure et la partie profilée inférieure (10, 20) sont soudées l'une avec l'autre aux points de jonction (2).

6. Partie de flèche de grue télescopique selon l'une quelconque des revendications 1 à 5, **caractérisée en ce que** les segments d'extrémité incluent des segments rectilignes ou plats (12, 22) qui sont agencés après les segments moins fortement incurvés (14, 24) ou qui sont contigus à ceux-ci.

7. Partie de flèche de grue télescopique selon l'une quelconque des revendications 1 à 5, **caractérisée en ce que** les segments d'extrémité sont formés par les segments moins fortement incurvés (14, 24).

8. Partie de flèche de grue télescopique selon l'une quelconque des revendications 1 à 7, **caractérisée en ce que** la section transversale dans la partie profilée supérieure (10) comporte un segment rectiligne ou plat (18) agencé après le segment plus fortement incurvé (16) ou contigu à celui-ci, lequel segment formant la fin supérieure, en particulier la fin horizontale supérieure de la section transversale.

9. Partie de flèche de grue télescopique selon l'une quelconque des revendications 1 à 7, **caractérisée en ce que** la section transversale dans la partie profilée supérieure (10) comporte un autre segment moins fortement incurvé (19) agencé après le segment plus fortement incurvé (16) ou contigu à celui-ci, ledit segment formant la fin supérieure de la section transversale, dans laquelle l'autre segment (19) présente en particulier un rayon de courbure identique ou supérieur au segment moins fortement incurvé (14) situé plus près du point de jonction.

10. Partie de flèche de grue télescopique selon l'une quelconque des revendications 1 à 9, **caractérisée en ce que** la section transversale dans la partie profilée inférieure comporte un segment rectiligne ou plat agencé après le segment plus fortement incurvé ou contigu à celui-ci, lequel segment formant la fin inférieure, en particulier la fin horizontale inférieure de la section transversale.

11. Partie de flèche de grue télescopique selon l'une quelconque des revendications 1 à 9, **caractérisée en ce que** la section transversale dans la partie profilée inférieure (20) comporte un autre segment moins fortement incurvé (28) agencé après le segment plus fortement incurvé (26) et contigu à celui-ci, ledit segment formant la fin inférieure de la section transversale, dans laquelle l'autre segment (28) présente en particulier un rayon de courbure identique ou supérieur au segment moins fortement incurvé (24) situé plus près du point de jonction.

12. Partie de flèche de grue télescopique selon l'une quelconque des revendications 1 à 11, **caractérisée en ce que** les rayons des segments plus fortement incurvés (16) dans la partie profilée supérieure (10) sont différents des rayons des segments plus fortement incurvés (26) dans la partie profilée inférieure (20), sont en particulier plus grands mais de préférence pas plus grands que la demi-largeur de la section transversale.

13. Partie de flèche de grue télescopique selon l'une quelconque des revendications 1 à 12, **caractérisée en ce que** les rayons des segments moins fortement incurvés (14) dans la partie profilée supérieure (10) sont différents des rayons des segments moins fortement incurvés (24) dans la partie profilée inférieure (20), sont en particulier plus petits mais de préférence pas plus petits que la demi-largeur de la section transversale.
